# EUROPEAN PATENT SPECIFICATION

(11) **EP 3 385 028 B1**
(45) Date of publication and mention of the grant of the patent: **29.04.2020**
(21) Application number: 18000222.2
(22) Date of filing: 07.03.2018
(51) Int. Cl.: B23Q 1/28, B23Q 5/40

(54) **LINEARLY MOVABLE SLIDE DEVICE WITH A POSITION FIXING MEANS**
LINEARE SCHLITTENVORRICHTUNG MIT EINER VORRICHTUNG ZUM FIXIEREN DER POSITION
CHARIOT DE TRANSLATION AVEC DISPOSITIF DE BLOCAGE DE LA POSITION

(30) Priority: 14.03.2017 IT 201700027926
(43) Date of publication of application: 10.10.2018
(73) Proprietor: VEP Automation S.r.l., 10092 Beinasco (Torino) (IT); Audi AG, 85045 Ingolstadt (DE)
(72) Inventor: Varetto, Ener, 10057 Sant'Ambrogio (Torino) (IT); Piccolo, Lio, 10095 Grugliasco (Torino) (IT); Knodel, Wilhelm, 85107 Baar-Ebenhausen (DE); Dorner, Reinhard, 85077 Manching (DE)
(74) Representative: Cian, Paolo

(56) References cited:
- EP-A1- 1 378 316
- EP-A1- 2 952 290
- DE-A1- 19 724 852

## Description

The present invention relates in general to devices for moving processing apparatuses, particularly to be used in machines for manufacturing motor vehicle body parts.

More particularly, the invention relates to a device of the type mentioned in the preamble of appended claim 1 (see for example DE 19724852A1). EP-2,952,290 discloses a device operated by a pneumatic cylinder connected to a base plate of the device, to move a platform which is slidable with respect to the base plate, and it comprises fixing means to fix the platform, which include switches fastened on the base plate in a series of adjustable positions, and connected to a fluid line to feed a fluid to the main cylinder. When the platform reaches predetermined positions with respect to the base plate, for example corresponding to the opposite end-of-stroke positions of the platform, the switches disconnect feeding of the fluid to the cylinder, and activate the fixing means in order to stop sliding of the platform.

The present invention aims at reaching the object to provide an improved device with respect to that of the above-mentioned document, the overall dimensions of which are relatively reduced, and in any case independent of the length of the maximum stroke available for the platform, and which is provided with means for finely adjusting the stop positions of the stroke of the platform, so as to allow the service stroke of the platform, and of the equipment associated therewith, to be changed at will in order to be highly flexible in use, and to enable also the platform to be secured in an extremely effective and precise manner in one or more predetermined positions, for example corresponding to the opposite end-of-stroke positions of the platform or to any position intermediate between them.

This object is achieved by virtue of a device having the features mentioned in the appended claims.

In particular, the device according to the invention comprises a base plate, a slidable platform, translation means for moving the platform which include a rotary motor, and fixing means comprising at least one operating braking securing unit connected to the base plate, to secure the platform in a predetermined position, which securing unit is arranged to interact with at least one first securing member of the platform facing the base plate, and includes a second securing member the shape of which corresponds to said first securing member and that is susceptible of assuming a position facing said first securing member, the second securing member being movable with respect to the base plate between a first inactive position closer to the base plate, and a second active position more spaced from the base plate in which the second securing member can engage the first securing member by positive form locking when these securing members face each other.

By virtue of these features, the device according to the invention is compact, easily adaptable to various needs of use, without entailing a change of its overall dimensions depending on the maximum stroke of the platform with respect to the base plate. Moreover, the fixing means allow the platform to be secured with respect to the base plate in an extremely safe manner.

According to a preferred feature of the invention, the rotary motor is an electric motor.

According to another preferred feature of the invention, the securing members include shaped recesses and/or cavities, and consist of toothings, or of pins and respective holes.

According to a further preferred feature, the securing members are made in the form of a first toothing associated with the platform (18), which extends along a direction parallel to the sliding of the platform, and of a second toothing corresponding to said first toothing and associated with the base plate.

By virtue of these features, the device of the invention is highly effective in use since the platform in its stop condition, which is already intrinsically irreversible because of the screw/nut-screw coupling existing between the threaded shaft and the nut-screw fixed to the platform, can be secured precisely and in a highly reliable manner at any position along its stroke, and safely clamped even in the case in which the load of the apparatuses connected to it is very high.

Further characteristics and advantages of the invention will be more apparent from the following detailed description, which is given purely by way of non-limiting example and is referred to the appended drawings in which:
Figure 1 is an overall perspective view of a slide device according to the invention,
Figure 2 is a schematic side elevational view of the device of Figure 1 sectioned along a longitudinal center plane thereof,
Figure 3 is an enlarged perspective view of a portion of Figure 1 from the side indicated by arrow III of such a figure,
Figure 4 is a more enlarged view of a detail of Figure 3,
Figure 5 is an enlarged perspective and partially exploded view of a part of Figure 1,

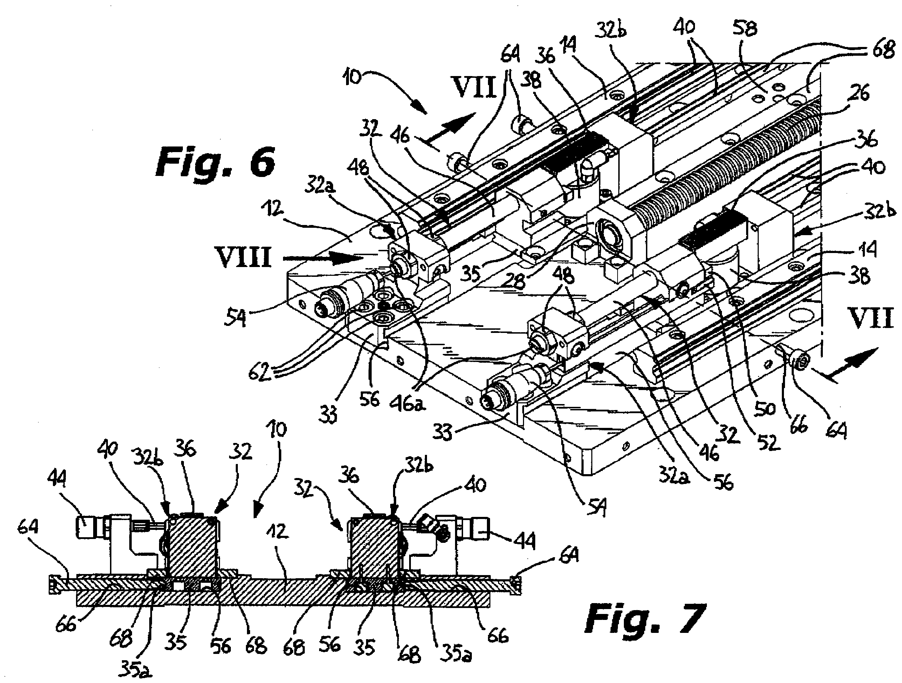

Figure 6 is an enlarged view of a front end part of Figure 1, indicated by arrow VI,
Figure 7 is a partial front elevational view of Figure 6, sectioned along line VII-VII,
Figure 8 is a perspective view of a securing unit of the device according to the invention, indicated by arrow VIII of Figure 6,
Figure 9 is a partially exploded view of the securing unit of Figure 8,
Figure 10 is a schematic perspective view of a detail indicated by arrow X of Figure 8, in a first operating position thereof,
Figure 11 is a view similar to Figure 10, showing the securing unit in a second operating position thereof,
Figure 12 is a schematic perspective view of a securing unit before the insertion thereof into a channel formation of the base plate of the device of the invention,
Figure 13 is a view similar to Figure 12, showing a step of the insertion of the securing unit into a channel formation of the base plate, and

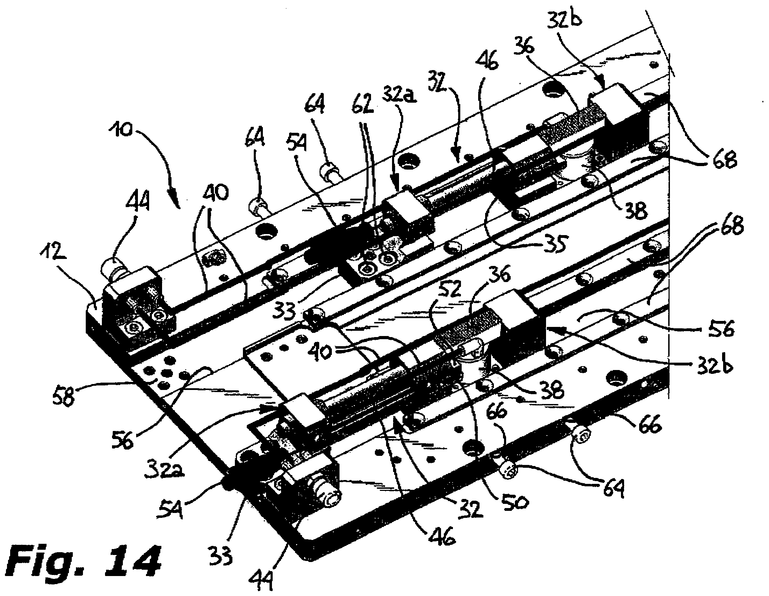

Figure 14 is a schematic perspective view showing a possible arrangement of a pair of securing units into respective channel formations of the base plate of the device of the invention.

With reference to the figures, 10 indicates as a whole a sliding device according to the invention, which is intended to move an apparatus movable between a pair of configurations thereof, such as an operating configuration and a rest configuration, for example adapted to carry out one or more processing operations on work-pieces fed to a production line.

The device 10 comprises a base plate 12, typically metallic and rectangular in shape, on which a pair of parallel guide rails 14 are fixed, which extend along a longitudinal direction of the plate 12.

Carriages 16 are slidably mounted on the rails 14, conveniently two carriages 16 for each rail 14, which are connected, for example by screws, to a platform 18, in such a manner that the platform 18 is slidable with respect to the base plate 12.

The platform 18 has in turn connecting members, such as centering holes and/or holes for the engagement of screws, to allow a processing apparatus (not shown in the figures) to be firmly secured to it.

Translation means for translating the platform 18 are connected to the base plate 12, to allow the platform 18 to be moved with respect to the base plate 12 in a series of operating positions.

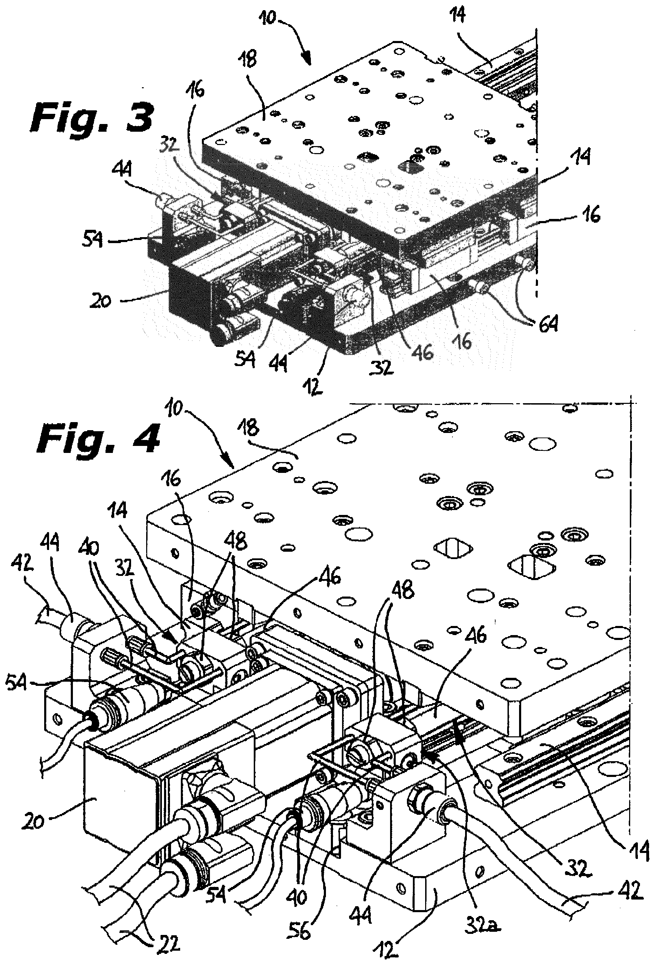

These translation means comprise a rotary motor 20, conveniently an electric motor, which is fixed to the base plate 12 and is connected via power supply cables 22 (figure 4) to an inverter of a type known per se (not shown) serving to manage the power supply and to control the motor 20.

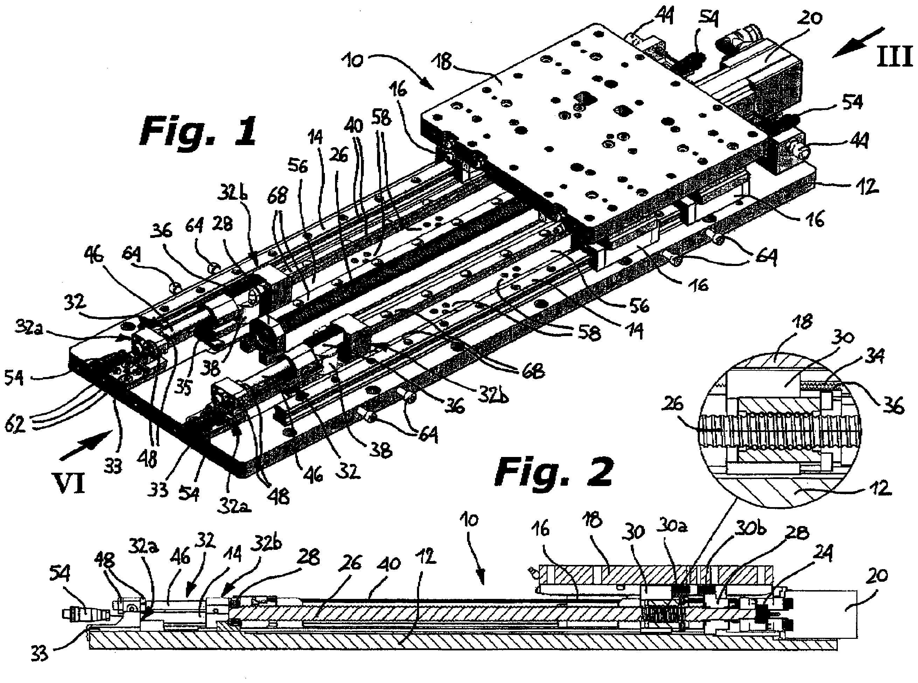

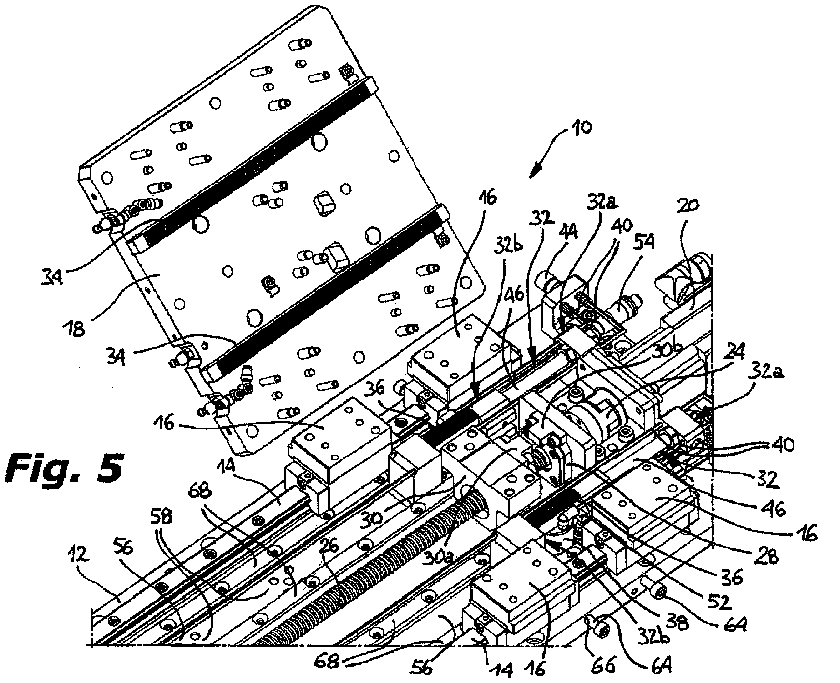

The motor 20, through a flexible joint 24 (Figures 2 and 5), is intended to bring into rotation a threaded shaft 26 which extends in a direction parallel to the rails 14 and is interposed between them, the shaft 26 being rotatably mounted with respect to the base plate 12 by means of a pair of rolling bearings 28.

Rotation of the shaft 26 with respect to the base plate 12 causes the platform 18 to move by means of a screw/nut-screw coupling. In particular, the shaft 26 rotatably engages a nut-screw 30 fixed below the platform 18 between the bearings 28, so that rotation of the shaft 26 is converted into a linear sliding of the platform 18 by means of the nut-screw 30.

Conveniently, the threaded shaft 26 and the nut-screw 30 are part of a recirculating ball screw, so as to reduce friction generated by rotation of the shaft 26 with respect to the nut-screw 30.

A pair of end-of-stroke buffers 30a and 30b (Figures 2 and 5) is fixed at opposite positions with respect to the nut-screw 30 and to the support of the bearing 28 closer to the motor 20, respectively, to define a position of a minimum distance for such support and nut-screw 30.

The device 10 is provided with fixing means to stop and secure the platform 18 in at least one predetermined position with respect to the base plate 12, that is to stop and secure the platform 18 in one, two, three, four or more positions with respect to the base plate 12.

More particularly, these fixing means comprise an operating braking system in order to contribute to the irreversibility of the movement of the platform 18 with respect to the base plate 12, in addition to the inherent irreversibility due to the screw/nut-screw coupling of the translation means referred to above, as well as to allow the stop position or positions of the platform 18 to be finely adjusted at any zone of its stroke. This stop system comprises at least one securing unit 32 described in detail below.

The platform 18 has at least one first toothing 34, constituting a first securing member, formed on its lower surface facing the base plate 12, which extends along a direction parallel to the sliding direction of the platform 18. A second toothing 36, corresponding to the toothing 34 and constituting a second securing member, is associated with the securing unit 32 in a position facing the toothing 34 when the platform 18 is located above the securing unit 32.

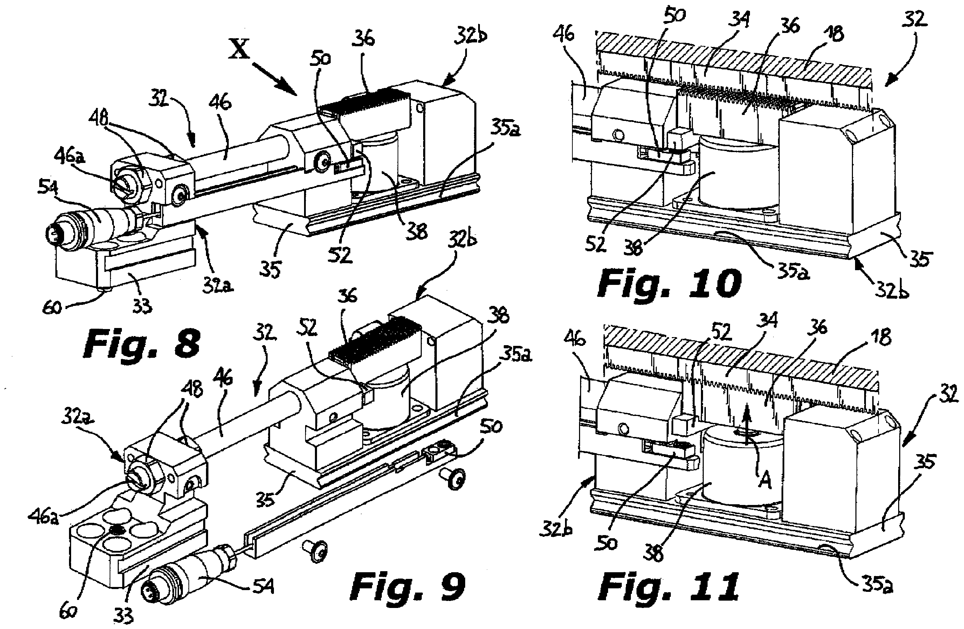

This second toothing 36 is movable with respect to the base plate 12 between a first inactive position closer to the base plate 12 (Figures 8, 9 and 10) and more spaced from the platform 18, and a second active position (Figure 11) more spaced from the base plate 12, and then closer to the platform 18, in which it can engage the first toothing 34 when the platform 18 is above the securing unit 32.

The movement of the teeth 36 between the aforesaid first and second positions, which occurs along the direction defined by arrow A of Figure 11, is controlled by an actuator cylinder 38 driven by a fluid, typically compressed air, which is associated with the securing unit 32. For this purpose, the actuator cylinder 38 is connected to a fluid feeding source by means of ducts 40 which are connected, via a connector 42, to an external line 44 for supplying the fluid.

More particularly, the securing unit 32 comprises a first portion 32a and a second portion 32b, interconnected by means of a rod 46 having a threaded end which engages a threaded hole of the portion 32a, and which is provided with a front notch 46a to allow the rod 46 to be rotated about its axis by means of a tool, in order to permit the mutual distance of the portions 32a and 32b to be micrometrically adjusted. The end thread of the rod 46 is also engaged, on opposite sides of the threaded hole of the portion 32a, by a pair of nuts 48 which allow the rod 46 to be tightened in a selected position.

Moreover, the portion 32b of the securing unit 32 comprises a sensor 50, conveniently of the inductive type, for detecting the position of the toothing 36, which is arranged so as to face a metal block 52 fixed to the relevant toothing 36 and connected, by a respective wiring, to a connector 54 that is accessible from the outside of the device 10. The sensor 50 allows to detect whether the toothing 36 is in its active or inactive position, respectively spaced from or into engagement with the respective toothing 34 of the platform 18, and to generate a release signal to allow the motor 20 to rotate, only if the toothing 36 is in its inactive position, to cause the platform 18 to move.

Preferably, the device 10 comprises a plurality of securing units 32, for example four with reference to the embodiment shown in the figures. For this purpose, a pair of parallel channel formations 56 are formed in the base plate 12, which extend in the longitudinal direction of the plate 12, and are therefore parallel to the shaft 26 and interposed between the rails 14, each for the engagement of one or more respective securing units 32. In this case, the platform 18 has a pair of parallel toothings 34, each of which extends along a direction corresponding to the respective channel formation 56, so that the toothings 36 of the securing units 32 are aligned with the toothings 34.

In each channel formation 56, which serves for positioning and guiding the movement of the respective securing units 32 during the adjustment of the positions thereof, more series of five holes are formed, which are spaced from each other, each of such series being indicated in the figures by the reference numeral 58. In particular, each series of holes 58 comprises one central smooth hole surrounded by four threaded holes arranged like the corners of a square.

The smooth central hole of each series 58 is intended to be engaged by a centering pin 60 (Figures 8 and 9) protruding downward from the support member 33 of the first portion 32a of the securing unit 32, while the four threaded holes are intended to be engaged by the threaded shank of four screws 62, in turn inserted in through holes of the support member 33, in order to enable this member 33 to be fixed on the bottom of the respective channel formation 56.

The second portion 32b of each securing unit 32 comprises a support member 35 the longitudinal sides of which have respective grooves 35a with a V-shaped cross section, for the engagement of the end tip of screws 64. Such screws 64 are inserted into holes 66 formed in the base plate 12 transversely to the channel formations 56 and coplanar with the base plate 12, to prevent the member 35, and the portion 32b connecter to it, to be risen with respect to the bottom of the respective channel formation 56.

Moreover, respective elongated sheets 68 are fixed to the base plate 12 at the side edges of each channel formation 56, on its side opposite to its bottom, which have a portion protruding towards the inside of the channel formation 56, in order to retain, together with the screws 64, the support member 35 in a position adjacent to the bottom of the channel formation 56, as well as to guide sliding of the support member 35 along the respective channel formation 56 during the adjustment of the position of the securing unit 32 with respect to the base plate 12.

In order to position a securing unit 32 in the respective channel formation 56, one can operate as described below.

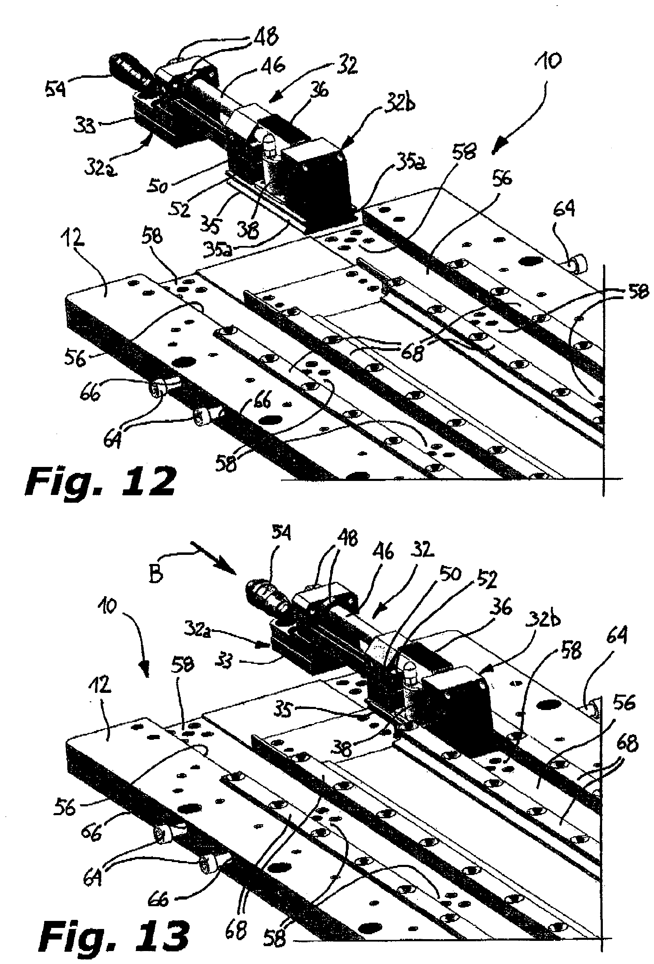

Each unit 32 is initially arranged close to one end of the respective channel formation 56 (figure 12), after which it is slid in the direction indicated by arrow B of Figure 13, in such a manner that the support members 33 and 35 of the portions 32a and 32b remain in contact with the bottom of the channel formation 56. A further sliding of the unit 32 along the channel formation 56 allows it to be brought into a selected position, in which the centering pin 60 is inserted into the central hole of a series of holes 58. Then, the screws 62 are inserted into the four holes of the support member 33, and screwed into the threaded holes of the series of holes 58 to lock the support member 33 in the selected position with respect to the channel formation 56.

By acting on the notch 46a of the rod 46 with a tool, such as the tip of a screwdriver, it is possible to adjust micrometrically the distance between the portion 32a and the portion 32b of the same securing unit 32, in view of the position in which the platform 18 need to be stopped during its sliding stroke along the guide rails 14, owing to the engagement of the toothing 36 with the corresponding toothing 34 of the platform 18. In the so obtained adjustment position of the unit 32, the rod 46 is locked by means of the tightening nuts 48 at opposite sides of the portion 32a of the unit 32.

In particular, and as shown in the figures, a pair of securing units 32 can be inserted in a same channel formation 56 of the base plate 12 and, taking into account the fact that the base plate 12 has two channel formations 56, the same base plate 12 can be provided with four units 32.

The two securing units 32 arranged on a same side of the plate 12 may be arranged in symmetrical positions with respect to the respective channel formations 56, for example corresponding to end-of-stroke positions of the platform 18, or these two securing units 32 may be arranged in positions staggered along the guide formations 56, so as to have at least a locking position of the platform 18 which is intermediate with respect to the extension of the channel formations 56.

In operation of the device 10, supplying of electric current to the rotary electric motor 20 via the inverter, allows rotation of the threaded shaft 26 to be caused and, consequently, the platform 18 to be moved along the base plate 12 owing to the engagement of the shaft 26 in the nut-screw 30 fixed to the platform 18. Of course, driving of the motor 20 will take place only if the sensors 50 associated with the toothings 36 of the various securing units 32 detect that these toothings 36 are in their inactive position, closer to the base plate 12 and therefore spaced from the toothings 34 of the platform 18.

When the platform 18 is stopped in a selected position, because of the rotation of the motor 20 is stopped, pressurized fluid is fed to the actuator cylinders 38, causing therefore the toothings 36 to be moved in the direction of arrow A of Figure 11. In this manner, the engagement between the toothings 34 of the platform 18 and the toothings 36 of the securing units 32 located below them is caused, in order to obtain the operating braking securing condition of the platform 18 with high accuracy, with respect to the base plate 12.

In spite of the fact that in the previous description the securing members 34 and 36 of the fixing means consist of corresponding toothings, they can have any other equivalent form in order to allow the platform 18 to be stopped and secured with respect to the base plate 12. In particular, such fixing means can be made so as to secure the platform 18 by positive form fitting and/or by friction with respect to the base plate 12. In the first case, the securing members can be made, beyond in the form of corresponding toothings, by one or more pins connected to the platform 18 or associated with a respective securing unit 32, and corresponding holes formed in a part associated with the securing unit 32 or with the platform 18, respectively.

## Claims

1. Linearly movable sled device, comprising a base plate (12), a platform (18) linearly slidably mounted with respect to the base plate (12) and provided with connection members to connect a processing apparatus, translation means (20, 26, 30) carried by the base plate (12) for moving the platform (18), which include a rotary motor (20) connected to the base plate (12) and adapted to cause rotation of a threaded shaft (26) that extends along the sliding direction of the platform (18) and engages a nut screw (30) fixed to the platform (18), and fixing means comprising at least one operating braking securing unit (32) connected to the base plate (12), for securing the platform (18) in a predetermined position with respect to the base plate (12),
**characterized in that** said securing unit (32) is arranged to interact with at least one first securing member (34) of the platform (18) facing the base plate (12), and includes a second securing member (36) the shape of which corresponds to said first securing member (34) and that is susceptible of assuming a position facing said first securing member (34), the second securing member (36) being movable with respect to the base plate (12) between a first inactive position closer to the base plate (12), and a second active position more spaced from the base plate (12) in which the second securing member (36) can engage the first securing member (34) by positive form locking when these securing members (34, 36) face each other.

2. Sled device according to claim 1, **characterized in that** the rotary motor (20) is an electric motor.

3. Sled device according to claim 1 or 2, **characterized in that** said securing members include shaped recesses and/or cavities, and consist of toothings (34, 36), or of pins and respective holes.

4. Sled device according to any one of Claims 1 to 3, **characterized in that** said securing members are adapted to secure the platform (18) in one, two, three, four or more positions with respect to the base plate (12).

5. Sled device according to claim 3 or 4, **characterized in that** said securing members are made in the form of a first toothing (34) associated with the platform (18), which extends along a direction parallel to the sliding of the platform (18), and of a second toothing (36) corresponding to said first toothing (34) and associated with the base plate (12).

6. Sled device according to any one of Claims 1 to 5, **characterized in that** the second securing member (36) can be moved between said first and second positions as a result of the operation of an actuator (38) driven by a pressurized fluid, associated with the securing unit (32).

7. Sled device according to any one of Claims 1 to 6, **characterized in that** said securing unit (32) comprises a sensor (50) for detecting the position of the second securing member (36), which sensor (50) is adapted to generate a release signal for the operation of said translation means (20, 26, 30) in order to cause the platform (18) to be moved when the second securing member (36) is in said first position.

8. Sled device according to any one of Claims 1 to 7, **characterized in that** said securing unit (32) is connected to the base plate (12) as a result of the engagement thereof in a channel formation (56) of the base plate (12) formed so as to be parallel to said threaded shaft (26) and alongside of it, and is adapted to be adjustably secured in said channel formation (56) to define a predetermined operating braking stop position of the platform (18).

9. Sled device according to claim 8, **characterized in that** each securing unit (32) comprises a first portion (32a) that can be fixed on the bottom of said channel formation (56) by removable connection means (60, 62), and a second portion (32b) including a support member (35) intended to be connected to said channel formation (56) by removable holding members (64, 68) associated with the base plate (12), said support member (35) having at least one side groove (35a) adapted to be engaged by the tip of a fixing screw (64) passing through a respective through hole (66) formed in the base plate (12).

10. Sled device according to claim 9, **characterized in that** the side edges of each channel formation (56), on the side opposite to the bottom of said formation (56), have projecting guide elements (68) to hold the support member (35) of said second portion (32a).

11. Sled device according to claim 9 or 10, **characterized in that** said first and second portions (32a, 32b) of the securing unit (32) are connected to each other by a rod (46) having a threaded portion, which rod (46) is rotatable about its axis to allow the mutual distance of said portions (32a, 32b) to be adjusted micrometrically, said threaded portion engaging a corresponding threaded hole of the first portion (32a), on which at least one tightening nut (48) is engaged to lock the rod (46) in a selected mutual position of said portions (32a, 32b).

12. Sled device according to any one of Claims 8 to 11, **characterized in that** it comprises a pair of securing units (32) associated with a same channel formation (56) of the base plate (12).

13. Sled device according to any one of Claims 8 to 12, **characterized in that** the base plate (12) comprises a pair of parallel channel formations (56) arranged on opposite sides with respect to said threaded shaft (26), to each of which at least one respective securing unit (32) is associated.

## Patentansprüche

1. Linear bewegliche Schlittenvorrichtung mit einer Grundplatte (12), einer Plattform (18), die gegenüber der Grundplatte (12) linear verschiebbar montiert und mit Verbindungselementen zum Verbinden einer Bearbeitungsvorrichtung versehen ist, von der Grundplatte (12) getragenen Verschiebemitteln (20, 26, 30) zum Bewegen der Plattform (18), die einen Drehmotor (20) aufweisen, der mit der Grundplatte (12) verbunden ist und dazu ausgelegt ist, eine Drehung einer Gewindewelle (26) zu bewirken, die sich entlang der Verschieberichtung der Plattform (18) ersteckt und in eine an der Plattform (18) befestigte Schraubmutter (30) eingreift, und Befestigungsmitteln mit mindestens einer mit der Grundplatte (12) verbundenen Betriebsbremssicherungseinheit (32) zur Sicherung der Plattform (18) in einer vorbestimmten Position in Bezug zur Grundplatte (12),
**dadurch gekennzeichnet, dass** die Sicherungseinheit (32) so angeordnet ist, dass sie mit mindestens einem der Grundplatte (12) zugewandten ersten Sicherungselement (34) der Plattform (18) zusammenwirkt und ein zweites Sicherungselement (36) enthält, dessen Form dem ersten Sicherungselement (34) entspricht und das eine Position einnehmen kann, die dem ersten Sicherungselement (34) zugewandt ist, wobei das zweite Sicherungselement (36) in Bezug zur Grundplatte (12) zwischen einer näher bei der Grundplatte (12) liegenden ersten inaktiven Position, und einer von der Grundplatte (12) weiter beabstandeten zweiten aktiven Position, in der das zweite Sicherungselement (36) formschlüssig mit dem ersten Sicherungselement (34) in Eingriff kommen kann, wenn diese Sicherungselemente (34, 36) einander zugewandt sind, bewegbar ist.

2. Schlittenvorrichtung nach Anspruch 1, **dadurch gekennzeichnet, dass** der Drehmotor (20) ein Elektromotor ist.

3. Schlittenvorrichtung nach Anspruch 1 oder 2, **dadurch gekennzeichnet, dass** die Sicherungselemente geformte Aussparungen und / oder Hohlräume aufweisen und aus Verzahnungen (34, 36) oder aus Stiften und entsprechenden Löchern bestehen.

4. Schlittenvorrichtung nach einem der Ansprüche 1 bis 3, **dadurch gekennzeichnet, dass** die Sicherungselemente dazu ausgelegt sind, die Plattform (18) in einer, zwei, drei, vier oder mehr Positionen in Bezug zur Grundplatte (12) zu sichern.

5. Schlittenvorrichtung nach Anspruch 3 oder 4, **dadurch gekennzeichnet, dass** die Sicherungselemente in Form einer mit der Plattform (18) verbundenen ersten Verzahnung (34), die sich entlang einer Richtung parallel zum Verschieben der Plattform (18) erstreckt, und einer mit der Grundplatte (12 verbundenen und der ersten Verzahnung (34) entsprechenden zweiten Verzahnung (36) ausgebildet sind.

6. Schlittenvorrichtung nach einem der Ansprüche 1 bis 5, **dadurch gekennzeichnet, dass** das zweite Sicherungselement (36) infolge der Betätigung eines durch ein druckbeaufschlagtes Fluid angetriebenen und mit der Sicherungseinheit (32) verbundenen Stellglieds (38) zwischen der ersten und der zweiten Position bewegbar ist.

7. Schlittenvorrichtung nach einem der Ansprüche 1 bis 6, **dadurch gekennzeichnet, dass** die Sicherungseinheit (32) einen Sensor (50) zum Erfassen der Position des zweiten Sicherungselements (36) umfasst, wobei der Sensor (50) dazu ausgelegt ist, ein Freigabesignal für den Betrieb der Verschiebemittel (20, 26, 30) zu erzeugen, um zu bewirken, dass die Plattform (18) bewegt wird, wenn sich das zweite Sicherungselement (36) in der ersten Position befindet.

8. Schlittenvorrichtung nach einem der Ansprüche 1 bis 7, **dadurch gekennzeichnet, dass** die Sicherungseinheit (32) infolge ihres Eingriffs in eine Kanalformation (56) der Grundplatte (32), die parallel zu der Gewindewelle (26) und neben dieser ausgebildet ist, mit der Grundplatte (12) verbunden wird, und dazu ausgelegt ist, in der Kanalformation (56) einstellbar befestigt zu werden, um eine vorbestimmte Betriebsbremsstopposition der Plattform (18) zu definieren.

9. Schlittenvorrichtung nach Anspruch 8, **dadurch gekennzeichnet, dass** jede Sicherungseinheit (32) einen ersten Abschnitt (32a), der durch entfernbare Verbindungsmittel (60, 62) am Boden der Kanalformation (56) befestigbar ist, und einen zweiten Abschnitt (32b) aufweist, welcher ein Stützelement (35) enthält, das dazu bestimmt ist, mit der Kanalformation (56) durch entfernbare Halteelemente (64, 68) verbunden zu werden, die mit der Grundplatte (12) verbunden sind, wobei das Stützelement (35) mindestens eine Seitennut (35a) hat, die dazu ausgelegt ist, mit der Spitze einer Befestigungsschraube (64), die ein entsprechendes Durchgangsloch (66) in der Grundplatte (12) passiert, in Eingriff zu kommen.

10. Schlittenvorrichtung nach Anspruch 9, **dadurch gekennzeichnet, dass** die Seitenkanten jeder Kanalformation (56) auf der dem Boden der Formation (56) gegenüberliegenden Seite vorstehende Führungselemente (68) zum Halten des Stützelements (35) des zweiten Abschnitts (32a) aufweisen.

11. Schlittenvorrichtung nach Anspruch 9 oder 10, **dadurch gekennzeichnet, dass** der erste und der zweite Abschnitt (32a, 32b) der Sicherungseinheit (32) durch eine Stange (46) mit einem Gewindeabschnitt miteinander verbunden sind, wobei die Stange (46) um seine Achse drehbar ist, um den gegenseitigen Abstand der Abschnitte (32a, 32b) mikrometrisch einstellen zu können, wobei der Gewindeabschnitt in ein entsprechendes Gewindeloch des ersten Abschnitts (32a) eingreift, an welchem mindestens eine Spannmutter (48) angebracht ist, um die Stange (46) in einer ausgewählten gegenseitigen Position der Abschnitte (32a, 32b) zu verriegeln.

12. Schlittenvorrichtung nach einem der Ansprüche 8 bis 11, **dadurch gekennzeichnet, dass** sie ein Paar Sicherungseinheiten (32) aufweist, die mit derselben Kanalformation (56) der Grundplatte (12) verbunden sind.

13. Schlittenvorrichtung nach einem der Ansprüche 8 bis 12, **dadurch gekennzeichnet, dass** die Grundplatte (12) ein Paar paralleler Kanalformationen (56) aufweist, die in Bezug zur Gewindewelle (26) auf gegenüberliegenden Seiten angeordnet sind, von denen jeder mindestens eine jeweilige Sicherungseinheit (32) zugeordnet ist.

## Revendications

1. Dispositif à coulisseau mobile linéairement, comprenant une plaque de base (12), une plate-forme (18) montée coulissante linéairement par rapport à la plaque de base (12) et munie d'éléments de connexion pour connecter un appareil de traitement, des moyens de translation (20, 26, 30) portés par la plaque de base (12) pour déplacer la plate-forme (18), qui comprennent un moteur rotatif (20) relié à la plaque de base (12) et adapté pour provoquer la rotation d'un arbre fileté (26) qui s'étend le long de la direction de coulissement de la plate-forme (18) et qui vient en prise avec une vis à écrou (30) fixée sur la plate-forme (18), et des moyens de fixation comprenant au moins une unité fonctionnelle (32) de fixation par freinage reliée à la plaque de base (12), pour fixer la plate-forme (18) dans une position prédéterminée par rapport à la plaque de base (12),
**caractérisé en ce que** ladite unité de fixation (32) est agencée pour interagir avec au moins un premier organe de fixation (34) de la plate-forme (18) faisant face - à la plaque de base (12), et comprend un deuxième organe de fixation (36) dont la forme correspond audit premier organe de fixation (34) et qui est susceptible de prendre position située face audit premier organe de fixation (34), le deuxième organe de fixation (36) étant mobile par rapport à la plaque de base (12) entre une première position inactive, plus proche de la plaque de base (12), et une deuxième position active, plus espacée de la plaque de base (12), dans laquelle le deuxième organe de fixation (36) est apte à venir en engagement avec le premier organe de fixation (34) par verrouillage positif lorsque ces organes de fixation (34, 36) se font face l'un l'autre.

2. Dispositif à coulisseau selon la revendication 1, **caractérisé en ce que** le moteur rotatif (20) est un moteur électrique.

3. Dispositif à coulisseau selon la revendication 1 ou la revendication 2, **caractérisé en ce que** lesdits organes de fixation comprennent des évidements et/ou des cavités de forme, et sont constitués de dentures (34, 36), ou d'ergots et de trous respectifs.

4. Dispositif à coulisseau selon l'une quelconque des revendications 1 à 3, **caractérisé en ce que** lesdits organes de fixation sont adaptés pour fixer la plate-forme (18) dans une, deux, trois, quatre ou plus positions par rapport à la plaque de base (12).

5. Dispositif à coulisseau selon la revendication 3 ou la revendication 4, **caractérisé en ce que** lesdits organes de fixation sont réalisés sous la forme d'une première denture (34) associée à la plate-forme (18), qui s'étend dans une direction parallèle au coulissement de la plate-forme (18), et d'une deuxième denture (36) correspondant à ladite première denture (34) et associée à la plaque de base (12).

6. Dispositif à coulisseau selon l'une quelconque des revendications 1 à 5, **caractérisé en ce que** le deuxième organe de fixation (36) peut être déplacé entre lesdites première et deuxième positions par suite du fonctionnement d'un actionneur (38) entraîné par un fluide sous pression, associé à l'unité de fixation (32).

7. Dispositif à coulisseau selon l'une quelconque des revendications 1 à 6, **caractérisé en ce que** ladite unité de fixation (32) comprend un capteur (50) pour détecter la position du deuxième organe de fixation (36), lequel capteur (50) est adapté pour générer un signal de déclenchement pour le fonctionnement desdits moyens de translation (20, 26, 30) afin de provoquer le déplacement de la plate-forme (18) lorsque le deuxième organe de fixation (36) est dans ladite première position.

8. Dispositif à coulisseau selon l'une quelconque des revendications 1 à 7, **caractérisé en ce que** ladite unité de fixation (32) est reliée à la plaque de base (12) de par son engagement dans une formation en canal (56) de la plaque de base (12) formée de manière à être parallèle audit arbre fileté (26) et le long d'un côté de celui-ci, et est adaptée pour être fixée de manière réglable dans ladite formation en canal (56) pour définir une position fonctionnelle prédéterminée d'arrêt par freinage de la plateforme (18).

9. Dispositif à coulisseau selon la revendication 8, **caractérisé en ce que** chaque unité de fixation (32) comprend une première partie (32a) qui peut être fixée sur le fond de ladite formation en canal (56) par des moyens de connexion réversible (60, 62), et une deuxième partie (32b) comprenant un élément de support (35) destiné à être relié à ladite formation en canal (56) par des éléments de maintien réversible (64, 68) associés à la plaque de base (12), ledit élément de support (35) ayant au moins une rainure latérale (35a) adaptée pour être engagée par la pointe d'une vis de fixation (64) passant par un trou traversant respectif (66) formé dans la plaque de base (12).

10. Dispositif à coulisseau selon la revendication 9, **caractérisé en ce que** les bords latéraux de chaque formation en canal (56), du côté opposé au fond de ladite formation (56), comportent des éléments de guidage saillants (68) pour maintenir l'élément de support (35) de ladite deuxième partie (32a).

11. Dispositif à coulisseau selon la revendication 9 ou la revendication 10, **caractérisé en ce que** lesdites première et deuxième parties (32a, 32b) de l'unité de fixation (32) sont reliées l'une à l'autre par une tige (46) ayant une partie filetée, laquelle tige (46) est rotative autour de son axe pour permettre que la distance mutuelle desdites parties (32a), 32b) soit réglable micrométriquement, ladite partie filetée s'engageant dans un trou fileté correspondant de la première partie (32a), sur lequel au moins un écrou de serrage (48) est engagé de façon à bloquer la tige (46) dans une position mutuelle sélectionnée desdites parties (32a, 32b).

12. Dispositif à coulisseau selon l'une quelconque des revendications 8 à 11, **caractérisé en ce qu'**il comprend une paire d'unités de fixation (32) associées à une même formation en canal (56) de la plaque de base (12).

13. Dispositif à coulisseau selon l'une quelconque des revendications 8 à 12, **caractérisé en ce que** la plaque de base (12) comprend une paire de formations en canaux parallèles (56) disposés sur des côtés opposés par rapport audit arbre fileté (26), à chacun desquels est associée au moins une unité de fixation (32) respective.
